# EUROPÄISCHE PATENTSCHRIFT

(11) **EP 1 108 166 B1**
(45) Veröffentlichungstag und Bekanntmachung des Hinweises auf die Patenterteilung: **20.02.2002**
(21) Anmeldenummer: 99944550.5
(22) Anmeldetag: 28.08.1999
(51) Int. Cl.: F16H 61/30

(54) **SCHALTVORRICHTUNG FÜR KRAFTFAHRZEUG-WECHSELGETRIEBE**
SHIFTING DEVICE FOR A VARIABLE-SPEED AUTOMOBILE TRANSMISSION
DISPOSITIF DE COMMANDE D'UNE BOITE DE VITESSES D'UN VEHICULE

(30) Priorität: 02.09.1998 DE 19839855
(43) Veröffentlichungstag der Anmeldung: 20.06.2001
(73) Patentinhaber: ZF FRIEDRICHSHAFEN Aktiengesellschaft, 88038 Friedrichshafen (DE)
(72) Erfinder: FISCHER, Dieter, D-88149 Nonnenhorn (DE); SPÄTH, Klaus, D-88276 Berg (DE)
(86) Internationale Anmeldenummer: EP9906351
(87) Internationale Veröffentlichungsnummer: WO0014438

(56) Entgegenhaltungen:
- EP-A- 0 123 051
- EP-A- 0 692 658
- DE-A- 4 025 658
- US-A- 2 245 714
- RATINAUD F: "LE DAF FT 95 SUPER SPACE CAB: UN MERVEILLEUX POIDS LOURD" REVUE TECHNIQUE DIESEL,FR,ETAI. BOULOGNE-BILLANCOURT, Bd. 31, Nr. 188, Seite 14-19 XP000461708 ISSN: 0037-2579

## Beschreibung

Die Erfindung betrifft eine Schaltvorrichtung für Kraftfahrzeug-Wechselgetriebe nach dem Oberbegriff des Anspruchs 1, wie sie aus der EP-A-692 658 bekannt ist.

Bei derartigen Schaltvorrichtungen dient die Drehbewegung der Schaltstange zur Vorwahl der einzelnen Schaltgassen und erfordert im allgemeinen keine hohen Schaltkräfte. Die axiale Längsbewegung der Schaltstange dient zum Einlegen des gewünschten Ganges und erfordert insbesondere bei Getrieben für schwere Fahrzeuge und solchen Fahrzeugen, deren Fahrersitz vom Getriebe entfernt angeordnet ist, größere Schaltkräfte.

Heutige Nutzfahrzeuge, wie Omnibusse und Lastkraftwagen, weisen mit ihrer Frontlenker-Bauweise räumliche Gegebenheiten für den Einbau des Getriebes auf, bei denen das Getriebe zwangsläufig weit vom Fahrersitz wegrückt. Besonders weit wird die Entfernung bei Fahrzeugen mit Unterflur- oder Heckmotoren. Durch das lange, bisweilen stramm laufende Schaltgestänge bei mechanisch geschalteten Getrieben wird der exakte Gangwechsel oft erschwert.

Damit der Fahrer eines Kraftfahrzeuges seine Aufmerksamkeit voll dem Straßenverkehr zuwenden kann, muß er in allen Tätigkeiten, die zum Führen eines Kraftfahrzeuges notwendig sind, so weit wie möglich entlastet und unterstützt werden.

Jeder Kraftfahrer weiß, wie entscheidend die einwandfreie Bedienung des Schaltgetriebes in schwierigen Verkehrssituationen sein kann. Pneumatische Schalthilfen für Nutzfahrzeuge aller Größenordnungen können hier Abhilfe schaffen.

Bisher bekannte Servoschaltungen sind teilweise direkt an das Getriebe angebaut und besitzen eine von außen zugängliche Steuerstange und Kolbenstange. Das Schaltgestänge ist mit der Steuerstange verbunden. Über eine Längsbewegung der Steuerstange wird die Unterstützung aktiviert. Diese Art der Ansteuerung findet man in Verbindung mit zwei Stangen- oder Kabelzugschaltungen. Nachteilig ist hierbei die Abdichtung der Steuer- und Kolbenstange über Faltenbälge und die fehlende Schmierung. Im Lkw ist diese Stelle starker Verschmutzung ausgesetzt. Bei Änderung der Schaltgestängeübersetzung ändert sich auch der Beginn der Servounterstützung bzw. diese muß durch Modifikation des Ventils an die Gestängeübersetzung angepaßt werden. Das gleiche gilt auch für Schalthilfen, welche aus einem voneinander getrennten Ansteuerventil und Servozylinder bestehen. Ventil und Zylinder sind über Kugelgelenke mit dem Schalthebel und einer Konsole, welche wiederum am Getriebe befestigt ist, verbunden. Diese Anordnung hat zusätzlich noch den Nachteil, daß sich bei jeder Schaltung die Teile relativ zum Getriebe und Fahrzeugrahmen bewegen und somit die Luftleitungen, mit denen Ventil und Zylinder miteinander verbunden sind, durchscheuern können.

Es sind derartige pneumatische Schalthilfen in aufgelöster Bauweise bekannt, die aus einem mechanisch-pneumatischen Steuerteil und einem separaten, pneumatischen Kraftteil bestehen. Eine Schalthilfe in aufgelöster Bauweise ist aus Loomann; Zahnradgetriebe; 2. Auflage; Springer Verlag; 1988; S. 225 bekannt. Der Steuerteil ist ein mechanisch betätigtes Steuerventil, das vom Schaltgestänge betätigt wird. Die Übertragung der Wählbewegung beim Gangwechsel geschieht dabei mechanisch direkt auf das Getriebe. Bei der Übertragung der Schaltbewegung wird das Steuerventil betätigt und gleichzeitig die Handschaltkraft mechanisch über einen Hebel auf das Getriebe übertragen. Die Handschaltkraft wird dabei von einem Druckluftzylinder zusätzlich pneumatisch unterstützt. Dieser Druckluftzylinder bildet dabei als ein Zweistellungs-Zylinder mit integriertem hydraulischen Dämpfer den pneumatischen Kraftteil. Eine direkte proportionale Abbildung der Handschaltkraft wird hier nicht erreicht. Die Wege zwischen Steuerteil und Kraftteil sind lang und der Anbau ist platzraubend. Beschädigungen der Druckluftleitungen zwischen Steuerteil und Kraftteil können nicht vermieden werden.

Aus der DE 195 39 471 ist eine Schaltvorrichtung bekannt, bei der das Steuerventil und der Kraftteil in einem Bauteil kombiniert wird. Die Schaltkraft wird je nach Schaltkraft des Fahrers proportional verstärkt und erzielt die gleichen Wirkungen wie bei einem handgeschalteten Getriebe. Der Fahrer verliert nicht das Gespür für die Schaltung, sein Empfinden, ob ein Gang eingelegt ist oder wie lang die Synchronisationphase andauert, kann er unmittelbar spüren. Bei dieser Schaltvorrichtung bleibt die Ansteuerbarkeit der pneumatischen Unterstützungseinrichtung verbesserungsbedürftig.

Der Erfindung liegt die Aufgabe zugrunde, eine Schaltvorrichtung aufzuzeigen, die die Ansteuerbarkeit der pneumatischen Unterstützungseinrichtung, insbesondere bei beengten Platzverhältnissen am Getriebe, verbessert.

Die Aufgabe wird gelöst durch eine Schaltvorrichtung mit den Merkmalen des Anspruchs 1. Ausgestaltungen sind Gegenstand von Unteransprüchen.

Erfindungsgemäß wird gegenüber bisherigen Ausgestaltungen die Anbindung der Wähl- und Schaltbewegung vom Fahrer an das Getriebe nicht an einem gemeinsamen Ort vorgenommen. Die Anbindung ist aufgeteilt in einen ersten Ort, an dem der Wählvorgang der jeweils gewünschten Schaltschiene entsprechend der vom Fahrer ausgewählten Schaltgasse auf die Schaltwel-e übertragen wird, und einen zweiten Ort, an dem die Schaltbewegung des Fahrers auf die Unterstützungseinrichtung übertragen wird, um dort verstärkt und auf die Schaltwelle übertragen zu werden, damit die Schaltbewegung des Fahrers in einer ausgewählten Schaltgasse in eine verstärkte axiale Bewegung der Schaltschiene umgesetzt wird.

Dabei wird die Handschaltkraft über die Mittel zum Schalten direkt ohne Hebelumsetzung auf die Steuerstange übertragen. Die Steuerstange weist einen Flansch auf, in den lösbar das Mittel zum Schalten eingreift.

Weitere vorteilhafte Ausgestaltungen zeigen die Mittel zum Schalten als hydraulische Mittel, als Elemente einer Kabelzugschaltung oder als mit einem vom Fahrer betätigten Schaltgestänge verbunden.

In einer weiteren vorteilhaften Ausgestaltung ist die Schaltwelle des Getriebes mit den Mitteln zum Wählen einer Gangstufe auf einer Seite der Unterstützungseinrichtung verbunden, während die Steuerstange der Unterstützungseinrichtung auf der der Schaltwelle gegenübergelegenen Seite der Unterstützungseinrichtung mit den Mitteln zum Schalten verbunden ist.

Hebel zur Übertragung der Schaltbewegung des Fahrers auf die Steuerstange der Unterstützungseinrichtung können damit entfallen und es wird eine einfache und sichere Schnittstelle zwischen Fahrer und Unterstützungseinrichtung hergestellt. Durch die lösbare Anbindung an die Steuerstange können die Mittel zum Schalten bei Bedarf von der Schaltvorrichtung bzw. Unterstützungseinrichtung abgenommen werden, ohne daß diese demontiert werden muß.

Die Schaltbewegung wird durch Druckluft als Hilfskraft unterstützt, während die Wählbewegung mit der Hand ohne Unterstützung ausgeführt wird. Dadurch, daß nur ein Teil des Gangwechsels durch eine Servokraft unterstützt wird, vereinfacht sich der Aufbau der Schalteinrichtung gegenüber vollständig servounterstützten Schalteinrichtungen. Kosten und Anbauaufwand werden erheblich reduziert, auch eine Nachrüstung bei bereits eingebauten Getrieben ist problemlos möglich. Der Fahrer kann weiterhin von Hand schalten, wenn der Luftdruck durch einen Schaden in der Druckluft-Anlage zu kle-n sein sollte oder gar ganz ausfallen sollte.

Dazu sind keine irgendwie gearteten Umschaltmaßnahmen erforderlich. Die Bremsfähigkeit des Kraftfahrzeuges, sofern sie durch das Getriebe geboten wird, bleibt gesichert.

Die Druckluftunterstützung steuert einen großen Teil der beim Schalten aufzuwendenden Kraft bei, jedoch nur soviel, daß dem Fahrer das Schaltgefühl erhalten bleibt. Die manuell vom Fahrer aufzubringende Handkraft wird durch die pneumatische Schaltunterstützung auf einen Bruchteil der insgesamt erforderlichen Kraft reduziert. Synchronisierte Nutzfahrzeug-Getriebe werden auch bei schweren Fahrzeugen zu Leichtschaltgetrieben. Bei Fahrten auf Gefällstrecken wird das Zurückschalten der Getriebe, insbesondere in den unteren Gängen, außerordentlich erleichtert und dadurch wird ein erheblicher Beitrag zur Steigerung der Unfallsicherheit beigesteuert.

Die erfindungsgemäße Schaltvorrichtung findet ihren Einsatzbereich bei allen Synchrongetrieben mit H-Schaltung, Doppel-H-Schaltung und überlagerter H-Schaltung. Sie findet auch für den Anbau am Getriebe im vom Fahrzeughersteller stark eingeschränkten Bauraum ausreichend Platz. Bei einem erforderlichen Tausch oder einer Nachrüstung sind die Ausfallzeiten für den Fahrzeugbetreiber erfreulich kurz, da die gesamte Schaltvorrichtung zusammen ausgetauscht bzw. montiert werden kann, ohne daß spezielle Einstellungen vor Ort am Fahrzeug vorgenommen werden müssen. Dem Fahrer bleibt bei einem Ausfall der Druckluftunterstützung uneingeschränkt die Schaltbarkeit des Getriebes erhalten, so daß er in Notfällen das Fahrzeug, wohl mit erhöhtem Kraftaufwand, doch aber sicher, durch Änderungen der Übersetzung abbremsen kann.

Durch eine entsprechende Auslegung der Schaltvorrichtung können die von ihr erzeugten Hilfskräfte zur Unterstützung der Schaltung an die Schaltanlage zwischen Fahrer und Getriebe angepaßt werden. Der Anbau der Schaltvorrichtung erfolgt fest am Getriebegehäuse, so daß keine Relativbewegungen zwischen Getriebe und Schaltvorrichtung erfolgen. Es sind keine bewegten Leitungen, Ventile oder Zylinder zwischen Getriebe und Schaltvorrichtung mehr vorhanden.

Kugelgelenke und Konsolen sind nicht mehr erforderlich.

Eine Nachrüstung der Schaltvorrichtung kann ohne eine Verkürzung des Schaltgestänges erfolgen. Die Einbaulage der pneumatischen Servounterstützungseinrichtung an der Schaltvorrichtung ist beliebig, sie kann angesteckt oder angeflanscht werden.

Die Erfindung wird anhand von Zeichnungen näher erläutert.

Es zeigen:
- Fig. 1: eine Schaltanlage nach dem Stand der Technik;
- Fig. 2: einen Schnitt durch die Schaltvorrichtung in Seitenansicht;
- Fig. 3: eine weitere Ausführungsform nach Fig. 2;
- Fig. 4: eine weitere Ausführungsform nach Fig. 2 und
- Fig. 5: eine weitere Ausführungsform.

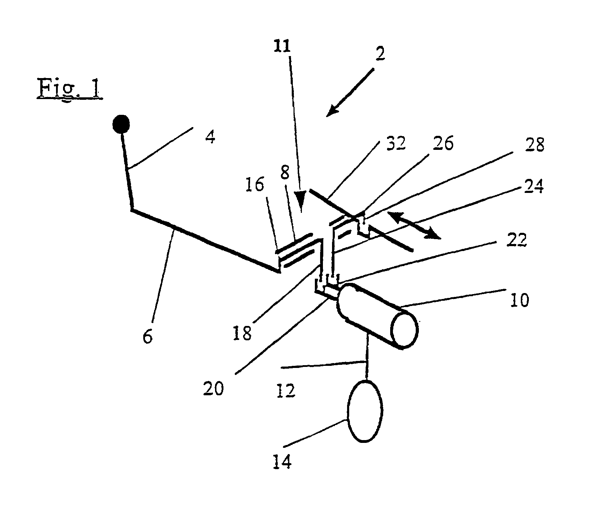

Die Fig. 1 zeigt in einer Skizze die Schaltanlage 2 eines Kraftfahrzeuges nach dem Stand der Technik. Von einem Schalthebel 4 aus führt eine Schaltstange 6 über eine Hebelumlenkung 8 zu einer Schaltvorrichtung 11 mit einer pneumatischen Servounterstützungseinrichtung 10. Die pneumatische Servounterstützungseinrichtung 10 weist eine Anschlußleitung 12 auf, die zu einem Vorratsbehälter 14 führt, aus dem die pneumatische Servounterstützungseinrichtung 10 mit Druckluft versorgt wird. Die Hebelumlenkung 8 weist einen ersren Hebel 16 auf, der mit der Schaltstange 6 vorzugsweise gelenkig verbunden ist. Die Hebelumlenkung 8 weist einen zweiten Hebel 18 auf, der wiederum in eine Steuerstange 2C eingreift, die in der pneumatischen Servounterstützungseinrichtung 10 angeordnet ist. Weiterhin ist in der pneumatischen Servounterstützungseinrichtung 10 eine Kolbenstange 22 vorgesehen, in die ein Hebel 24 eingreift, welcher über eine drehbare Schaltwelle 26 mit einem Hebel 28 im Fahrzeuggetriebe 30 verbunden ist. Der Hebel 28 greift in eine Schaltschiene 32 ein, durch die in bekannter Weise Übersetzungsverhältnisse des Getriebes geschaltet werden können. Eine Bewegung des Hebels 24 wird über die Schaltwelle 26 in eine Bewegung des Hebels 28 übertragen, so daß der Hebel 28 die Schaltschiene 32 in eine axiale Bewegung versetzen kann. Bei dieser Bewegung nimmt die Schaltschiene 32 vorzugsweise drei Positionen ein, zwei axiale Endpositionen, die je einem geschalteten Übersetzungsverhältnis entsprechen und eine zwischen den Endpositionen liegende Mittelposition, die einer Neutralstellung des Getriebes entspricht.

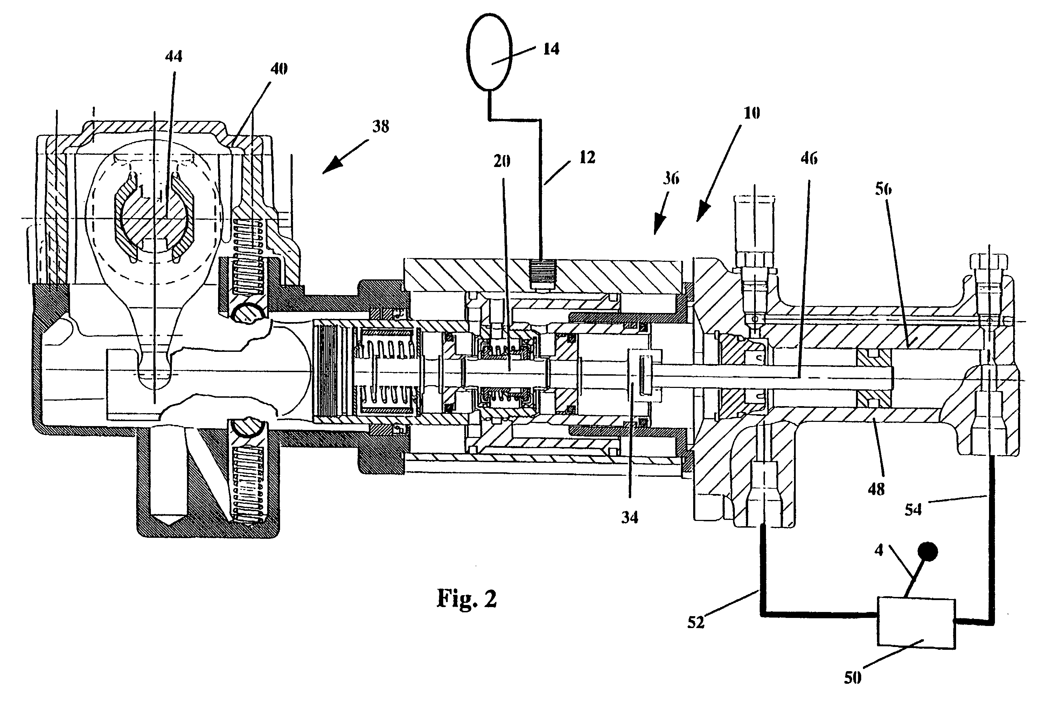

Die Fig. 2 zeigt die Schaltvorrichtung 40 im Schnitt in einer Seitenansicht mit der Unterstützungseinrichtung 10. In der Unterstützungseinrichtung 10 weist die Steuerstange 20 an ihrem Ende 36 einen Flansch 34 auf. Am gegenüberliegenden Ende 38 der Unterstützungseinrichtung 10 greift ein Hebel 24 in die Kolbenstange 22 ein. Über die Steuerstange 20 wird der Verstärkungsprozeß ausgelöst. Zur Unterstützung und Verstärkung der über die Steuerstange 20 in die Unterstützungseinrichtung 10 eingeleiteten Handschaltkraft wird der Unterstützungseinrichtung 10 aus einem Vorratsbehälter 14 über die Druckleitung 12 Druckluft zugeführt. Die verstärkte Kraft wird von der Kolbenstange 22 über den Hebel 24 auf die Hohlwelle 52 übertragen.

In den Flansch 34 greift lösbar eine Stange ein, die als eine Kolbenstange 46 in einer hydraulischen Schalteinrichtung 48 angeordnet ist. Über Zuleitungen 52 und 54 wird der Schalteinrichtung 48 hydraulische Flüssigkeit von einem Schaltbock 50, den der Fahrer mit dem Schalthebel 4 betätigt, zugeführt, die, ausgelöst vom Fahrer und je nach dessen Schaltrichtung in der gewählten Schaltgasse, eine Bewegung der Kolbenstange 46 nach links oder rechts in der Zeichenebene der Fig. 2 bewirkt. Der Wählvorgang der gewünschten Schaltgasse geschieht über die Schaltwelle 44 am gegenüberliegenden Ende der Unterstützungseinrichtung 10. Die Bewegung der Kolbenstange 46 im Kolbenraum 56 wird vom Flansch 34 auf die Steuerstange 20 übertragen und löst dort die Unterstützung der Handschaltkraft des Fahrers aus. Um die Steuerstange 20 herum ist ein Rohr 58 angeordnet. Das Rohr 58 begrenzt die axiale Bewegung der Steuerstange 20, so daß keine Beschädigung der Bauteile der Unterstützungseinrichtung 10 durch eine zu große eingeleitete Handschaltkraft auftreten kann. Die Länge des Rohres 58 ist auf die axial zulässige Bewegung angepaßt.

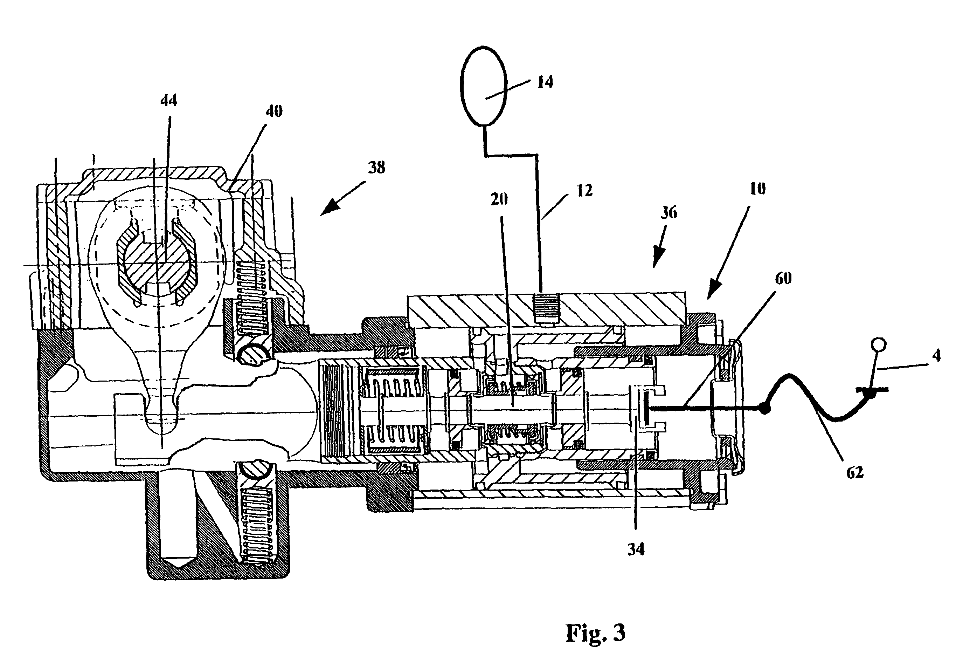

Die Fig. 3 zeigt eine Schalteinrichtung 40 in einer veränderten Ausführung. In den Flansch 34 an der Steuerstange 20 greift hier eine Stange 60 ein, die über einen Kabelzug 62 mit dem Schalthebel 4 verbunden ist. Die Schaltung des Fahrers in der gewählten Schaltgasse wird über den Kabelzug 62 auf die Steuerstange 20 am einen Ende 36 der Unterstützungseinrichtung 10 übertragen, während die Auswahl der gewünschten Schaltgasse auf die Schaltwelle 44 am anderen Ende 38 der Unterstützungseinrichtung 10 übertragen wird.

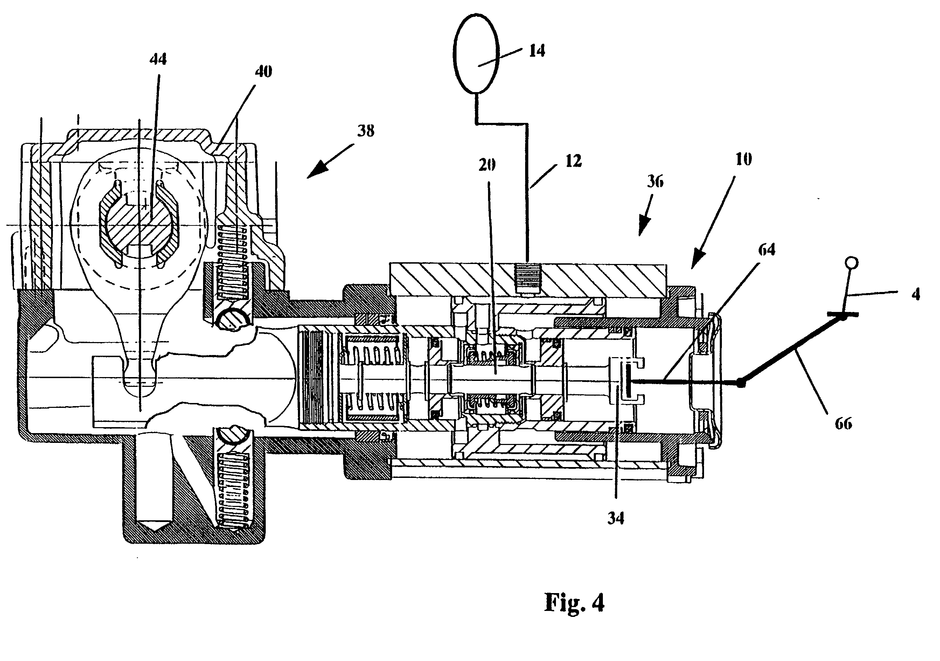

Die Fig. 4 zeigt eine Schalteinrichtung 40 in einer anderen veränderten Ausführung. In den Flansch 34 an der Steuerstange 20 greift hier eine Stange 64 ein, die über ein Schaltgestänge 66 mit dem Schalthebel 4 verbunden ist.

Die Schaltung des Fahrers in der gewählten Schaltgasse wird über das Schaltgestänge 66 auf die Steuerstange 20 am einen Ende 36 der Unterstützungseinrichtung 10 übertragen, während die Auswahl der gewünschten Schaltgasse auf die Schaltwelle 44 am anderen Ende 38 der Unterstützungseinrichtung 10 übertragen wird.

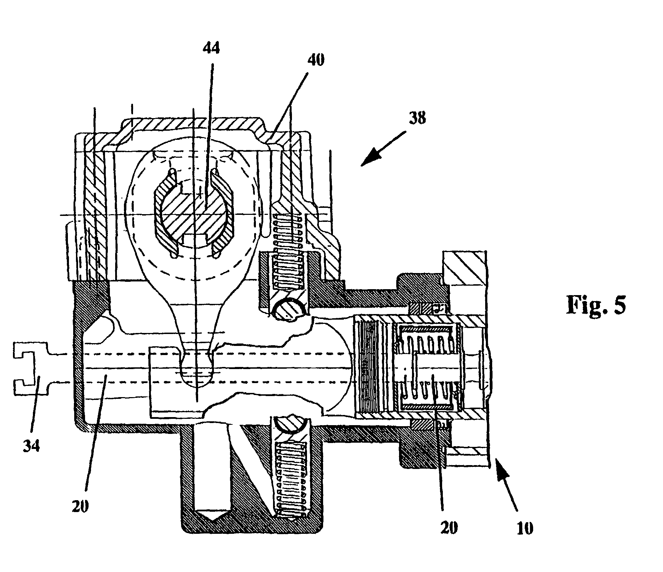

Die Fig. 5 zeigt eine Schalteinrichtung mit dem Flansch 34 an dem Ende 38 der Steuerstange 20. Jede der in Fig. 2 bis Fig. 4 gezeigten Mittel zum Schalten können in den Flansch 34 eingreifen. Die Verlängerung der Steuerstange 20 ist hier nur in unterbrochenen Linien dargestellt.

### Bezugszeichen

- 2: Schaltanlage
- 4: Schalthebel
- 6: Schaltstange
- 8: Hebelumlenkung
- 10: Servounterstützungseinrichtung
- 11: Schaltvorrichtung
- 12: Anschlußleitung
- 14: Vorratsbehälter
- 16: Hebel
- 18: Hebel
- 20: Steuerstange
- 22: Kolbenstange
- 24: Hebel
- 26: Schaltwelle
- 28: Hebel
- 30: Fahrzeuggetriebe
- 32: Schaltschiene
- 34: Flansch
- 36: Ende
- 38: Ende
- 40: Schaltvorrichtung
- 44: Schaltwelle
- 46: Kolbenstange
- 48: Schalteinrichtung
- 50: Schaltbock
- 52: Zuleitung
- 54: Zuleitung
- 56: Kolbenraum
- 58: Rohr
- 60: Stange
- 62: Kabelzug
- 64: Stange
- 66: Schaltgestänge

## Patentansprüche

1. Schaltvorrichtung (11, 40) mit Servounterstützungseinrichtung (10) für ein Getriebe (30) mit Gehäuse eines Fahrzeuges mit Mitteln zum Wählen und zum Schalten einer Gangstufe des Getriebes (30), mit einer Schaltwelle (26, 44), die über Hebel (28) in Schaltschienen (32) des Getriebes (30) eingreift, einem mit der Schaltwelle (26, 44) verbundenen Hebel (24), der mit einer Kolbenstange (22) der Unterstützungseinrichtung (10) verbunden ist und mit einer Steuerstange (20) der Unterstützungseinrichtung (10), auf die die Mittel zum Schalten unmittelbar ohne Hebelumlenkung einwirken, **dadurch gekennzeichnet, daß** die Steuerstange (20) einen Flansch (34) aufweist, in den das Mittel zum Schalten (46, 60, 64) innerhalb der Servounterstützungseinrichtung (10) lösbar eingreift.

2. Schaltvorrichtung (11, 40) mit Servounterstützungseinrichtung (10) für ein Getriebe (30) nach Anspruch 1, **dadurch gekennzeichnet, daß** die Mittel zum Schalten hydraulische Mittel (46, 48) sind.

3. Schaltvorrichtung (11, 40) mit Servounterstützungseinrichtung (10) für ein Getriebe (30) nach Anspruch 1, **dadurch gekennzeichnet, daß** die Mittel zum Schalten Elemente einer Kabelzugschaltung (60, 62) sind.

4. Schaltvorrichtung (11, 40) mit Servounterstützungseinrichtung (10) für ein Getriebe (30) nach Anspruch 1, **dadurch gekennzeichnet, daß** die Mittel zum Schalten mit einem vom Fahrer betätigten Schaltgestänge (64, 66) verbunden sind.

5. Schaltvorrichtung (11, 40) mit Servounterstützungseinrichtung (10) für ein Getriebe (30) nach einem der Ansprüche 1 bis 4, **dadurch gekennzeichnet, daß** die Schaltwelle (44) mit den Mitteln zum Wählen einer Gangstufe auf einer Seite der Unterstützungseinrichtung (10) verbunden ist und die Steuerstange (20) der Unterstützungseinrichtung (10) auf der der Schaltwelle (44) gegenübergelegenen Seite der Unterstützungseinrichtung (10) mit den Mitteln zum Schalten (4, 46, 48, 60, 62, 64, 66) verbunden ist.

6. Schaltvorrichtung (11, 40) mit Servounterstützungseinrichtung (10) für ein Getriebe (30) nach einem der Ansprüche 1 bis 5, **dadurch gekennzeichnet, daß** in der Unterstützungseinrichtung (10) um die Steuerstange (20) ein Rohr (58) angeordnet ist, das die axiale Bewegung der Steuerstange (20) begrenzt, um Beschädigungen der Unterstützungseinrichtung zu vermeiden.

## Claims

1. Shifting device (11, 40) with a hydraulic support system (10) for a vehicle transmission (30) with housing and means for selecting and shifting of a gear step of the transmission (30), with a gear change shaft (26, 44), which via levers (28) engages with shift rails (32) of the transmission (30), with the gear change shaft being linked to a lever (24), which is connected to a piston rod (22) of the hydraulic support system (10), and with a control rod (20) of the hydraulic support system (10), on which the means for shifting act directly without a relay arm,
**characterized**
**in that** the control rod (20) has a flange (34) for separable engagement of the means for shifting (46, 60, 64) within the hydraulic support system (10).

2. Shifting device (11, 40) with a hydraulic support system (10) for a transmission (30) according to claim 1,
**characterized**
**in that** the means for shifting are hydraulic means (46, 48).

3. Shifting device (11, 40) with a hydraulic support system (10) for a transmission (30) according to claim 1,
**characterized**
**in that** the means for shifting are elements of a cable control system (60, 62).

4. Shifting device (11, 40) with a hydraulic support system (10) for a transmission (30) according to claim 1,
**characterized**
**in that** the means for shifting are linked to a gearshift linkage (64, 66) activated by the driver.

5. Shifting device (11, 40) with a hydraulic support system (10) for a transmission (30) according to one of the claims 1 to 4,
**characterized**
**in that** the gear change shaft (44) is linked to the means for selecting a gear step on one side of the hydraulic support system (10) and the control rod (20) of the hydraulic support system (10) is linked to the means for shifting (4, 46, 48, 60, 62, 64, 66) on the side of the hydraulic support system (10) opposite the gear change shaft (44).

6. Shifting device (11, 40) with a hydraulic support system (10) for a transmission (30) according to one of the claims 1 to 5,
**characterized**
**in that** a pipe (58) is arranged around the control rod (20) in the hydraulic support system in a manner that the axial movement of the control rod (20) is limited to avoid damage to the hydraulic support system.

## Revendications

1. Mécanisme de changement de vitesses (11, 40), doté d'un dispositif à servo-assistance (10) pour une boîte de vitesses (30) avec carter, d'un véhicule automobile doté de dispositifs pour la sélection et le changement d'un rapport de la boîte de vitesses (30), doté d'un arbre de commande (26, 44), qui engrène, par l'intermédiaire d'un levier (28), dans les réglettes (32) de la boîte de vitesses (30), doté d'un levier (24) lié à l'arbre de commande (26, 44), lequel est lié à la bielle (22) du dispositif à servo-assistance (10) et à une tige de commande (20) du dispositif à servo-assistance (10), sur laquelle les dispositifs de changement de vitesses agissent directement, sans renvoi du levier, **caractérisé en ce que** la tige de commande (20) comporte un manchon (34), dans lequel le dispositif de changement de vitesses (46, 60, 64) engrène, à l'intérieur du dispositif à servo-assistance (10), de façon amovible.

2. Mécanisme de changement de vitesses (11, 40) doté d'un dispositif à servo-assistance (10) pour une boîte de vitesses (30) selon la revendication 1, **caractérisé en ce que** les dispositifs de changement de vitesses soient des dispositifs hydrauliques (46, 48).

3. Mécanisme de changement de vitesses (11, 40) doté d'un dispositif à servo-assistance (10) pour une boîte de vitesses (30) selon la revendication 1, **caractérisé en ce que** les dispositifs de changement de vitesses soient des composants d'une commande à câbles (60, 62).

4. Mécanisme de changement de vitesses (11, 40) doté d'un dispositif à servo-assistance (10) pour une boîte de vitesses (30) selon la revendication 1, **caractérisé en ce que** les dispositifs de changement de vitesses soient liés à une tringlerie de commande (64, 66) actionnée par le conducteur.

5. Mécanisme de changement de vitesses (11, 40) doté d'un dispositif à servo-assistance (10) pour une boîte de vitesses (30) selon une des revendications 1-4, **caractérisé en ce que** l'arbre de commande (44) soit lié aux dispositifs de sélection d'un rapport d'un des côtés du dispositif à servo-assistance (10) et **en ce que** la tige de commande (20) du dispositif à servo-assistance (10) soit liée du côté opposé de l'arbre de commande (44) du dispositif à servo-assistance (10) aux dispositifs de changement de vitesses (4, 46, 48, 60, 62, 64, 66).

6. Mécanisme de changement de vitesses (11, 40) doté d'un dispositif à servo-assistance (10) pour une boîte de vitesses (30) selon une des revendications 1-5, **caractérisé en ce que** dans le dispositif à servo-assistance (10) soit disposé, autour de la tige de commande (20), un tube (58) qui limite le mouvement en sens axial de la tige de commande (20), afin d'éviter des endommagements du dispositif à servo-assistance.
